# EUROPEAN PATENT SPECIFICATION

(11) **EP 4 191 702 B1**
(45) Date of publication and mention of the grant of the patent: **06.05.2026**
(21) Application number: 22842338.0
(22) Date of filing: 30.06.2022
(51) Int. Cl.: H01M 4/133, H01M 4/13, H01M 4/1393, H01M 4/36, H01M 4/587, H01M 4/62, H01M 10/052, H01M 4/02

(54) **NEGATIVE ELECTRODE FOR SECONDARY BATTERY COMPRISING ACTIVE MATERIAL LAYER HAVING DIFFERENT COMPOSITION, ELECTRODE ASSEMBLY AND SECONDARY BATTERY COMPRISING THE SAME**
NEGATIVE ELEKTRODE FÜR SEKUNDÄRBATTERIE MIT AKTIVMATERIALSCHICHT UNTERSCHIEDLICHER ZUSAMMENSETZUNG, ELEKTRODENANORDNUNG UND SEKUNDÄRBATTERIE MIT DERSELBEN
ÉLECTRODE NÉGATIVE POUR BATTERIE SECONDAIRE COMPRENANT UNE COUCHE DE MATÉRIAU ACTIF DE COMPOSITION DIFFÉRENTE, ENSEMBLE D'ÉLECTRODES ET BATTERIE SECONDAIRE LE COMPRENANT

(30) Priority: 12.07.2021 KR 20210091135
(43) Date of publication of application: 07.06.2023
(73) Proprietor: LG Energy Solution, Ltd., Seoul 07335 (KR)
(72) Inventor: NOH, Taegyun, Daejeon 34122 (KR)
(74) Representative: Plasseraud IP
(86) International application number: PCT/KR2022/009475
(87) International publication number: WO 2023/287076

(56) References cited:
- JP-A- 2008 078 109
- JP-A- 2020 173 954
- KR-A- 20150 028 582
- KR-A- 20200 073 801
- KR-B1- 102 124 105

## Description

### [TECHNICAL FIELD]

### Cross Citation with Related Application(s)

This application claims the benefit of Korean Patent Application No. 10-2021-0091135 filed on July 12, 2021 with the Korean Intellectual Property Office.

The present disclosure relates to a negative electrode for secondary battery including an active material layer having different composition, an electrode assembly and a secondary battery including same.

### [BACKGROUND]

Along with the technology development and increased demand for mobile devices, demand for secondary batteries as energy sources has been increasing rapidly. Among such secondary batteries, a lithium secondary battery exhibiting energy density and operating potential, and having long cycle life and low self-discharge rate is now commercialized and widely used.

Also, as interest in environmental issues grows in recent years, studies are frequently conducted on an electric vehicle (EV), a hybrid electric vehicle (HEV) and the like which can replace a vehicle using fossil fuels such as a gasoline vehicle and a diesel vehicle, which are one of the main causes of air pollution. As a power source for such electric vehicle (EV) and hybrid electric vehicle (HEV), lithium secondary batteries with high energy density, high discharge voltage, and output stability are mainly studied and used.

Such lithium secondary batteries are being developed as a model that can perform rapid charging in response to the needs of consumers, and for this purpose, design of the battery is performed in the direction of high energy density, long life, and low swelling.

However, as the charge rate of rapid charging increases, lithium precipitation occurs on the negative electrode of the battery, which occurs locally at first, but eventually causes problems that worsen the battery life retention and swelling.

By the way, the electrodes for secondary battery have different coating amounts for each position due to the sliding phenomenon caused by the coating of the electrode active material slurry during the manufacturing process, and accordingly, the electrodes are different in the charge/discharge characteristics, so that the negative electrode has a difference in the lithium deposition rate, which will affect the long-term performance of the battery.

Therefore, there is a need to develop a technology capable of solving these problems.

### [DETAILED DESCRIPTION OF THE INVENTION]

### [Technical Problem]

It is an object of the present disclosure to provide a negative electrode for secondary battery that can solve the lithium precipitation imbalance problem caused by the difference in the loading amount on a plane caused by the sliding phenomenon during the manufacture of the electrode active material layer, thereby preventing rapid deterioration of battery performance, an electrode assembly and a secondary battery including the same.

### [Technical Solution]

According to one aspect of the present disclosure, there is provided a negative electrode for secondary battery in which a negative electrode active material layer is formed on at least one surface of a negative electrode current collector,
wherein the negative electrode active material layer includes a first negative electrode active material layer, and a second negative electrode active material layer formed on one side or both sides of the first negative electrode active material layer in a planar, and
wherein the first negative electrode active material layer includes uncoated graphite as a first negative electrode active material, and the second negative electrode active material layer includes carbon-coated graphite as a second negative electrode active material.

Wherein, the negative electrode includes a first inclined portion on one end side, a second inclined portion on the other end side, and a flat portion located between the first inclined portion and the second inclined portion in the planar, and a first negative electrode active material layer may be formed on the flat portion, and a second negative electrode active material layer may be formed on the first inclined portion and the second inclined portion.

The graphite of the first negative electrode active material and the second negative electrode active material may be artificial graphite or natural graphite, and carbon of the second negative electrode active material may be low-crystalline carbon, amorphous carbon, or a mixture thereof.

Wherein, the carbon may be coated in an amount of 5 to 20% by weight based on the total weight of the carbon-coated graphite.

Further, the first negative electrode active material layer and the second negative electrode active material layer include at least one selected from the group consisting of a binder and a conductive material, in which the types thereof may be different, or the content ratios of constituents may be different.

Specifically, the first negative electrode active material may include uncoated graphite as an active material: styrene-butadiene rubber (SBR) as a binder: carbon black or carbon nanotubes (CNT) as a conductive material in a weight ratio of 93~97: 1~5: 0.1~5, and
the second negative electrode active material may include carbon-coated graphite as an active material: styrene-butadiene rubber (SBR) as a binder: carbon black or carbon nanotubes (CNT) as a conductive material in a weight ratio of 93~97: 1~5: 0.1~5.

Meanwhile, the volume ratio of the first negative electrode active material layer and the second negative electrode active material layer may be 6:4 to 4:6.

According to another aspect of the present disclosure, there is provided an electrode assembly for secondary battery comprising the negative electrode for secondary battery,
wherein the electrode assembly includes a separator interposed between a positive electrode and a negative electrode, and
wherein the positive electrode has a positive electrode active material layer formed on at least one surface of a positive electrode current collector.

Wherein, the positive electrode active material layer may include a first positive electrode active material layer, and a second positive electrode active material layer formed on one side or both sides of the first positive electrode active material layer in a planar and having a composition different from that of the first positive electrode active material layer.

Wherein, the first positive active material layer and the second positive active material layer include at least one selected from the group consisting of a positive active material, a binder, and a conductive material included in each layer, in which the types thereof may be different, or the content ratios of components may be different.

According to yet another aspect of the present disclosure, there is provided a secondary battery in which the electrode assembly for secondary battery as mentioned above, and an electrolyte are incorporated in a battery case.

### [BRIEF DESCRIPTION OF THE DRAWINGS]

Fig. 1 is a cross-sectional view which schematically shows a negative electrode for secondary battery according to an embodiment of the present disclosure;
Fig. 2 is a cross-sectional view which schematically shows an electrode assembly for secondary battery according to an embodiment of the present disclosure; and
Fig. 3 is a cross-sectional view which schematically shows an electrode assembly for a secondary battery according to another embodiment of the present disclosure.

### [DETAILED DESCRIPTION OF THE EMBODIMENTS]

Hereinafter, the present disclosure will be described in detail based on preferred embodiments of the present disclosure with reference to the accompanying drawings.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way. Therefore, the embodiments described herein and the configuration shown in the accompanying drawings are merely preferred embodiments of the present disclosure, and are not intended to represent all the technical idea of the present disclosure, whereby there may be various equivalents and modifications that can substitute them at the time of filing and the scope of the present disclosure is not limited to the embodiments described below.

According to one embodiment of the present disclosure, there is provided a negative electrode for secondary battery in which a negative electrode active material layer is formed on at least one surface of a negative electrode current collector,
wherein the negative electrode active material layer includes a planar first negative electrode active material layer, and a second negative electrode active material layer formed on one side or both sides of the first negative electrode active material layer, and
wherein the first negative electrode active material layer includes uncoated graphite as a first negative electrode active material, and the second negative electrode active material layer includes carbon-coated graphite as a second negative electrode active material.

Wherein, the negative electrode current collector may be one selected from the group consisting of copper, stainless steel, aluminum, nickel, titanium, calcined carbon, copper that is surface-treated with dissimilar metal, stainless steel that is surface-treated with dissimilar metal, and an aluminum-cadmium alloy, and specifically, it may be a metal containing copper as the negative electrode current collector.

Meanwhile, in the related art, the negative electrode active material layer formed on the negative electrode current collector is formed as a single layer or as a multilayer with different compositions. However, when the negative electrode active material layer is produced, a sliding phenomenon appears at one end and the other end in a direction perpendicular to the coating direction depending on the process in which the a negative electrode active material slurry is coated, which thus leads to lack of recognition of the problem that the charge/discharge characteristics appear differently depending on the position.

Thus, the present inventors have attempted to recognize and solve these problems. In particular, the inventors confirmed that as the demand for rapid charging increases in recent years, a lithium precipitation phenomenon appearing during the progress of rapid charging greatly affects the performance of secondary batteries, and such lithium precipitation also appears differently depending on the position in the negative electrode active material layer due to the sliding phenomenon.

Thus, the present inventors have repeated in-depth studies to solve these problems because the sliding phenomenon inevitably appears on the active material layer during the coating process, and as a result, confirmed that in the case where the active material layers are formed differently so as to include mutually different active materials on a plane, and the active material and the like are appropriately selected so as to prevent lithium precipitation imbalance, it is possible to solve these problems and improve the performance of the secondary battery, and completed the present disclosure.

Therefore, the negative electrode active material layer in the negative electrode for secondary battery of the present disclosure is divided into a first negative electrode active material layer, and a second negative electrode active material layer formed on one side or both sides of the first negative electrode active material layer in a planar, wherein the first negative electrode active material layer includes uncoated graphite as a first negative electrode active material, and the second negative electrode active material layer includes carbon-coated graphite as a second negative electrode active material, thereby eliminating the lithium precipitation imbalance problem according to the position and the loading amount.

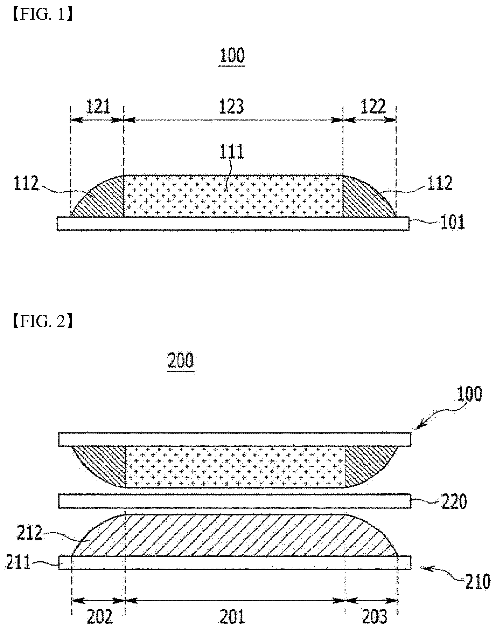

In order to describe its configuration more specifically, Fig. 1 schematically shows a cross-sectional view of a negative electrode for secondary battery according to an embodiment of the present disclosure.

Referring to Fig. 1, the negative electrode 100 for secondary battery has a structure in which a first negative electrode active material layer 111 and a second negative electrode active material layer 112 are formed on a negative electrode current collector 101. At this time, the negative electrode 100 for secondary battery comprises a first inclined portion 121 on one end side and a second inclined portion 122 on the other end side, and a flat portion 123 located between the first inclined portion 121 and the second inclined portion 122 in the planar, wherein a first negative electrode active material layer 111 is formed on the flat portion 123, and a second negative electrod active material layer 112 is formed on the first inclined portion 121 and the second inclined portion 122.

That is, during slurry coating for forming the negative electrode active material layer, a sliding phenomenon appears at both ends in the coating direction, and a first inclined portion 121 and a second inclined portion 122 are provided according to the sliding.

Therefore, the first inclined portion 121 and the second inclined portion 122 and the flat portion 123 are different in the loading amounts and have different charge/discharge characteristics, whereby the lithium precipitation mode also appears differently, which difference results in deterioration of battery performance.

Therefore, the present disclosure solves the above problems by forming a negative electrode active material layer capable of occluding and releasing more lithium on the first inclined portion 121 and the second inclined portion 122 unlike the flat portion 123.

That is, the second negative electrode active material layer includes carbon-coated graphite as a second negative electrode active material, and thus strengthens the particle strength by carbon coating, properly distributes pores on the surface even after electrode rolling, and increases the surface conductivity, so that the rate characteristics of the negative electrode active material can be improved and thus, the lithium deposition rates of the flat portion, the first inclined portion, and the second inclined portion are made uniform.

At this time, for the first negative electrode active material and the second negative electrode active material, graphite is used as a base. In this case, for the first negative electrode active material and the second negative electrode active material, artificial graphite or natural graphite can be applied as the graphite. Specifically, both the first negative electrode active material and the second negative electrode active material may be artificial graphite that improves the rapid charging characteristics of the battery so as to meet the purpose of preventing deterioration of battery performance during rapid charging. At this time, the artificial graphite may be secondary particles formed by agglomeration of primary particles.

The artificial graphite as such secondary particles may have a porosity of 10% to 30%, specifically, a porosity of 15% to 20%. When this range is satisfied, the contact area with lithium ions becomes wider and thus, capacity characteristics and life characteristics can be improved.

Further, the artificial graphite may have a specific surface area of 0.5m²/g to 1.5m₂/g, specifically, 0.8m₂/g to 1.2m²/g. Artificial graphite particles having a specific surface area (BET) within this range may have excellent rapid charging characteristics, and cycle life characteristics.

The natural graphite may be a spherical single particle, and in this case, the rolling performance and high temperature storage characteristics can be improved.

Such natural graphite may also have a porosity of 10% to 30%, specifically, a porosity of 15% to 20%. When the porosity satisfies this range, the contact area with lithium ions becomes wider, and thus, the capacity characteristics and life characteristics can be improved.

Further, the natural graphite may have a specific surface area of 0.5m²/g to 5m²/g, preferably 1.5m²/g to 2.5m²/g, When the specific surface area is within the above range, the rolling performance during rolling is improved, which is preferable in terms of minimizing changes in the electrode structure.

The specific surface area of the graphite can be measured by a BET (Brunauer-Emmett-Teller) method. For example, the specific surface area can be measured by a 6-point BET method according to a nitrogen gas adsorption-flow method using a porosimetry analyzer (Belsorp-II mini by Bell Japan Inc.). Meanwhile, the carbon coating of the carbon-coated graphite used as the second negative electrode active material may be performed by a conventionally known method, but is not limited thereto. For example, it can be formed by providing carbon or a precursor thereof onto the graphite surface and pyrolyzing it. That is, it can be formed by heat treatment. At this time, the heat treatment temperature can be in the range of 1000°C to 4000°C.

Alternatively, the carbon material may be provided on the graphite surface and then formed by applying a shear force such as simple dry mixing or mechanofusion process.

In this case, specifically, the carbon may be low-crystalline carbon, amorphous carbon, or a mixture thereof.

Specifically, the low crystalline carbon or amorphous carbon may be formed from a carbon precursor including at least one selected from the group consisting of sucrose, methylene diphenyl diisocyanate, polyurethane, phenolic resin, naphthalene resin, polyvinyl alcohol, polyvinyl chloride, furfuryl alcohol, polyacrylonitrile, polyamide, furan resin, cellulose, styrene, polyimide, epoxy resin, vinyl chloride resin, coal-based pitch, petroleum-based pitch, mesophase pitch, tar and low-molecular weight heavy oil, but the present disclosure is not limited thereto.

In addition, the carbon may be coated in an amount of 5 to 20% by weight, specifically 10 to 20% by weight, based on the total weight of the carbon-coated graphite.

If the carbon is coated in a too small content outside the above range, it is difficult to exhibit the effect according to the present disclosure, and when the content is too large, the resistance to movement of lithium ions increases, which is not preferable.

Meanwhile, the average particle diameter (D50) of the uncoated graphite as the first negative electrode active material may be 6 *µ*m to 20 *µ*m, specifically 8 *µ*m to 18 *µ*m, and more specifically 10 *µ*m to 18 *µ*m. When the above range is satisfied, the battery performance such as capacity and storage characteristics is excellent as a whole.

The average particle diameter (D50) of the carbon-coated graphite as the second negative electrode active material may be 10 *µ*m to 25 *µ*m, specifically, 12 *µ*m to 20 *µ*m. When the above range is satisfied, it is preferable from the viewpoint of realizing excellent rapid charging characteristics of the battery.

The average particle diameter (D50) is the particle diameter corresponding to a point of 50% in the cumulative distribution of the number of particles relative to the particle diameter, and can be measured using a laser diffraction method. Specifically, the powder to be measured is dispersed in a dispersion medium, and then introduced into a commercially available laser diffraction particle size analyzer (e.g., Microtrac S3500). When the particles pass through the laser beam, the diffraction pattern difference according to the particle size is measured to calculate the particle size distribution. D50 can be measured by calculating the particle diameter corresponding a point of 50% in the cumulative distribution of the number of particles relative to the particle diameter in the analyzer.

Meanwhile, each of the first negative electrode active material layer and the second negative electrode active material layer may further include a binder and/or a conductive material. The types and contents of these binders and conductive materials may be the same for each layer, but specifically, any one or more selected from the group consisting of a binder and a conductive material may have different types. That is, the type of binder used in each layer may be different, the type of the conductive material may be different, or both may be different.

Alternatively, even if the types are the same, the content ratios of components contained in the first negative electrode active material layer and the second negative electrode active material layer may be different. That is, the content ratio of the negative electrode active material, the binder, and the conductive material may be different in the first negative electrode active material layer and the second negative electrode active material layer.

The binder is a type of binder known in the art, and is not limited as long as it is a type capable of improving the adhesion strength of the electrode components, and for example, it may be at least one selected from the group consisting of polyvinylidene fluoride, polyvinylidene fluoride-hexafluoropropylene, polyvinyl alcohol, starch, hydroxypropyl cellulose, regenerated cellulose, polyvinylpyrrolidone, polytetrafluoroethylene, polyethylene, polypropylene, ethylene-propylene-diene terpolymer (EPDM), sulfonated EPDM, fluororubber, polyacrylic acid (PAA) as a water-based binder, styrene-butadiene rubber (SBR), and carboxymethylcellulose (CMC). Further, the binder of the first negative electrode active material layer and the binder of the second negative electrode active material layer can be selected from the above-mentioned examples and can be selected to be equal to each other or different from each other.

When the binder is included, it may be included in each active material layer in an amount of 0.1 to 30% by weight, specifically 1 to 10% by weight, and more specifically 1 to 5% by weight. Of course, the content of each layer may be different.

Similarly, the conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whisker such as zinc oxide and potassium titanate; conductive metal oxides such as titanium oxide; conductive materials such as polyphenylene derivatives can be used. Further, the conductive material of the first negative electrode active material layer and the conductive material of the second negative electrode active material layer can be selected from the above-mentioned examples and can be selected to be equal to each other or different from each other.

When the conductive material is included, each active material layer may be included in an amount of 0.1 to 30% by weight, specifically 1 to 10% by weight, and more specifically 1 to 5% by weight. Of course, the content of each layer may be different.

Most specifically, the first negative electrode active material includes uncoated graphite as an active material: styrene-butadiene rubber (SBR) as a binder: carbon black or carbon nanotubes (CNT) as a conductive material in a weight ratio of 93~97: 1~ 5: 0.1~5, and
the second negative electrode active material may include carbon-coated graphite as an active material: styrene-butadiene rubber (SBR) as a binder: carbon black or carbon nanotubes (CNT) as a conductive material in a weight ratio of 93~97: 1~5: 0.1~5.

Meanwhile, the volume ratio of the first negative electrode active material layer and the second negative electrode active material layer is not limited in that they are formed to correspond to the inclined portion and the flat portion, but when determined based on a conventional process, it may be, for example, 4:6 to 9:1, or 4:6 to 8:2, or 4:6 to 7:3, and most specifically, 4:6 to 6:4.

Meanwhile, according to another embodiment of the present disclosure, there is provided an electrode assembly for secondary battery comprising the negative electrode for secondary battery,
wherein the electrode assembly includes a separator interposed between a positive electrode and a negative electrode, and
wherein the positive electrode has a positive electrode active material layer formed on at least one surface of a positive electrode current collector.

A cross-sectional view of the electrode assembly according to one embodiment is schematically shown in Fig. 2. Referring to Fig. 2, the electrode assembly 200 includes a negative electrode 100, a positive electrode 210, and a separator 220 interposed between the negative electrode 100 and the positive electrode 210, which are similar to the configuration as described above. Here, the positive electrode 210 has a positive electrode active material layer 212 formed on a positive electrode current collector 211, and similarly to the negative electrode 100, it is configured so as to have a flat portion 201 and inclined portions 202 and 203 at both ends of the flat portion 201, but a positive electrode active material layer 212 having the same composition as a whole was formed.

Meanwhile, the positive electrode active material layer may include a first positive electrode active material layer, and a second positive active material layer formed on one side or both sides of the first positive active material layer in a planar and having a composition different from that of the first positive active material layer.

Here, "having different composition" means that the first positive active material layer and the second positive active material layer include at least one selected from the group consisting of a positive active material, a binder, and a conductive material included in each layer, in which the types thereof are different, or the content ratios of constituents may be different.

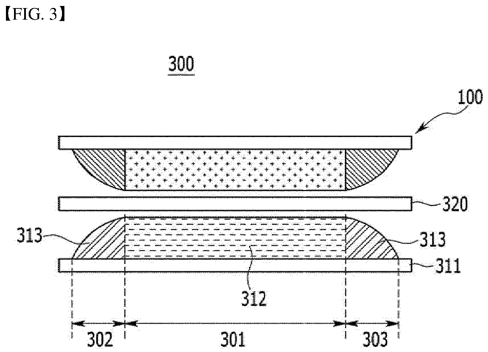

A cross-sectional view of such a structure is schematically shown in Fig. 3. Referring to Fig. 3, the electrode assembly 300 includes a negative electrode 100, a positive electrode 310, and a separator 320 interposed between the negative electrode 100 and the positive electrode 310, which are similar to the configuration as described above.

Here, similarly to the negative electrode 100, the positive electrode 310 has a flat portion 301 and inclined portions 302 and 303 at both ends of the flat portion 301 according to the sliding phenomenon of the slurry during manufacturing for the formation of the positive electrode active material layer. A first positive electrode active material layer 312 is formed on the flat portion 301 on the positive electrode current collector 311, and a second positive electrode active material layer 313 is formed on the inclined portions.

The positive electrode active material contained in the first positive electrode active material layer and the second positive electrode active material layer may be a layered compound such as lithium cobalt oxide (LiCoO₂) or lithium nickel oxide (LiNiO₂) or a compound substituted with one or more transition metals; lithium manganese oxides such as chemical formula Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where, M = Co, Mn, Al, Cu, Fe, Mg, B or 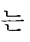 Ga, and x = 0.01 ~ 0.3);lithium manganese composite oxide represented by chemical formula LiMn₂₋ₓMₓO₂ (where, M = Co, Ni, Fe, Cr, Zn or Ta, and x = 0.01 ~ 0.1) or Li₂Mn₃MO₈ (where, M = Fe, Co, Ni, Cu or Zn); a lithium manganese composite oxide having a spinel structure represented by LiNiₓMn₂₋ₓO₄;lithium iron phosphate represented by LiMn₂O₄; LiFePO₄ with a Li portion of the chemical formula substituted with an alkaline earth metal ion; a disulfide compound; Fe₂(MoO₄)₃ and the like, but is not limited thereto.

The type of the positive electrode active material contained in each layer may be the same or different. Examples of the binder and the conductive material contained in the positive active material layer are the same as described in the negative electrode active material layer, and these can also include the same type or different types in each layer.

Further, the content ratio of the active material, the binder, and the conductive material may be the same or different in each layer.

Meanwhile, according to yet another embodiment of the present disclosure, there is also provided a secondary battery in which the electrode assembly for secondary battery and an electrolyte are incorporated in a battery case.

Specific details of the components other than the electrode assembly in the secondary battery are well known in the art, and thus, detailed description thereof will be omitted herein.

Below, the present disclosure will be described in more detail by way of examples.

### <Preparation Example 1> Preparation of carbon-coated graphite

A needle coke was pulverized using a jet mill and then sieved to obtain a powder. The powder was heat-treated (graphitized) at 3,000°C for 20 hours under an inert (Ar) gas atmosphere to prepare primary artificial graphite particles having an average particle diameter (D50) of 2.5 *µ*m. After that, the artificial graphite primary particles and petroleum-based pitch were added at a ratio of 92:10, and then heat-treated at 1,500°C for 10 hours, and the artificial graphite primary particles were agglomerated into secondary particles, granulated, and at the same time, carbon-coated to prepare carbon-coated artificial graphite (carbon content: 3 wt%, average particle diameter (D50): about 15 *µ*m).

### <Comparative Example 1>

A mixture of the carbon-coated artificial graphite prepared in Preparation Example 1 as an active material, SBR as a binder, and carbon black as a conductive material in a weight ratio of 95:3.5:1.5, and water as a dispersion medium were used, and the mixture and the dispersion medium were mixed at a weight ratio of 1:2 to prepare a slurry for the active material layer. Using a slot die, the slurry for the active material layer was coated onto one surface of a copper (Cu) thin film with a thickness of 10 *µ*m, which is a negative electrode current collector, and dried at 130°C under vacuum for 1 hour to form an active material layer. The active material layer thus formed was rolled by a roll pressing process to produce a negative electrode having an active material layer with a thickness of 80 *µ*m.

### <Comparative Example 2>

A negative electrode was produced in the same manner as in Comparative Example 1, except that in Comparative Example 1, a mixture of uncoated artificial graphite (average particle diameter (D50): 18*µ*m) instead of carbon-coated artificial graphite as an active material, SBR as a binder and carbon black as a conductive material in a weight ratio of 95:3.5:1.5, and water as a dispersion medium were used, and a slurry for an active material layer in which the mixture and dispersion medium were mixed in a weight ratio of 1:2 was used to form an active material layer.

### <Experimental Example 1>

The negative electrodes produced in Comparative Examples 1 and 2 were used, and Li metal was used as the positive electrode, and an electrolyte solution in which lithium hexafluorophosphate (LiPF₆) with a concentration of 1.15 M was dissolved in an organic solvent consisting of ethylene carbonate/dimethyl carbonate/ethyl methyl carbonate (mixed volume ratio of EC/DMC/EMC = 3/4/3) was used to produce a coin-type half-cell.

After operating the coin-type half-cell at CHC 0.1C for 3 cycles, the 3C-rate current value was calculated and charged at 3C for 28 minutes to determine the inflection point at the time of primary differentiation and dQ/dV of the profile, and Li-plating SOC (%) was quantified. The results are shown in Table 1 below.

**[Table 1]**

| | Comparative Example 1 | Comparative Example 2 |
|---|---|---|
| Li-plating SOC(%) | 38 | 28 |

Referring to Table 1, it can be seen that the rapid charging characteristics of Comparative Example 1 are superior to the rapid charging characteristics of Comparative Example 2. Therefore, when the active material of Comparative Example 1 was used for the inclined portion, it is expected that the lithium precipitation nonuniformity can be eliminated.

### [Industrial Applicability]

In the negative electrode for secondary battery according to the present disclosure, a first negative electrode active material layer and a second negative electrode active material layer are formed in a planar so as to contain mutually different active materials, whereby The difference in lithium deposition rate caused by sliding during electrode coating can be alleviated, and deterioration of the charge/discharge characteristics of secondary batteries due to deposition imbalance can be prevented.

In addition, when the positive electrode also similarly forms the first positive active material layer and the second positive active material layer in a planar so as to include mutually different active materials, it is possible to more effectively solve such problems and exhibit more improved secondary battery performance.

## Claims

1. A negative electrode (100) for secondary battery in which a negative electrode active material layer is formed on at least one surface of a negative electrode current collector (101),
wherein the negative electrode active material layer includes a first negative electrode active material layer (111), and a second negative electrode active material layer (112) formed on one side or both sides of the first negative electrode active material layer (111) in a planar, and
wherein the first negative electrode active material layer (111) includes uncoated graphite as a first negative electrode active material, and the second negative electrode active material layer (112) includes carbon-coated graphite as a second negative electrode active material.

2. The negative electrode (100) for secondary battery according to claim 1, wherein:
the negative electrode (100) includes a first inclined portion (121) on one end side, a second inclined portion (122) on the other end side, and a flat portion (123) located between the first inclined portion (121) and the second inclined portion (122) in a planar, and
a first negative electrode active material layer (111) is formed on the flat portion (123), and a second negative electrode active material layer (112) is formed on the first inclined portion (121) and the second inclined portion (122).

3. The negative electrode (100) for secondary battery according to claim 1, wherein:
graphite of the first negative electrode active material and the second negative electrode active material is artificial graphite or natural graphite.

4. The negative electrode (100) for secondary battery according to claim 1, wherein:
carbon of the second negative electrode active material includes low-crystalline carbon, amorphous carbon, or a mixture thereof.

5. The negative electrode (100) for secondary battery according to claim 1, wherein:
the carbon is coated in an amount of 5 to 20% by weight based on the total weight of the carbon-coated graphite.

6. The negative electrode (100) for secondary battery according to claim 1, wherein:
the first negative electrode active material layer (111) and the second negative electrode active material layer (112) include at least one selected from the group consisting of a binder and a conductive material, in which the types thereof are different, or the content ratios of constituents are different.

7. The negative electrode (100) for secondary battery according to claim 6, wherein:
the first negative electrode active material includes uncoated graphite as an active material: styrene-butadiene rubber (SBR) as a binder: carbon black or carbon nanotubes (CNT) as a conductive material in a weight ratio of 93~97: 1~5: 0.1~5, and
the second negative electrode active material includes carbon-coated graphite as an active material: styrene-butadiene rubber (SBR) as a binder: carbon black or carbon nanotubes (CNT) as a conductive material in a weight ratio of 93~97: 1~5: 0.1~5.

8. The negative electrode (100) for secondary battery according to claim 1, wherein:
a volume ratio of the first negative electrode active material layer (111) and the second negative electrode active material layer (112) is 4:6 to 6:4.

9. An electrode assembly (200, 300) for secondary battery comprising the negative electrode (100) for secondary battery according to claim 1,
wherein the electrode assembly (200) includes a separator (220) interposed between a positive electrode (210) and a negative electrode (220), and
wherein the positive electrode (210) has a positive electrode active material layer (212) formed on at least one surface of a positive electrode current collector (211).

10. The electrode assembly (200, 300) for secondary battery according to claim 9, wherein:
the positive electrode active material layer (212) includes a first positive electrode active material layer (312), and a second positive electrode active material layer (313) formed on one side or both sides of the first positive electrode active material layer (312) in a planar and having a composition different from that of the first positive electrode active material layer (312).

11. The electrode assembly (200, 300) for secondary battery according to claim 10, wherein:
the first positive active material layer (312) and the second positive active material layer (313) include at least one selected from the group consisting of a positive active material, a binder, and a conductive material included in each layer, in which the types thereof are different, or the content ratios of components are different.

12. A secondary battery in which the electrode assembly (200, 300) for secondary battery according to claim 9, and an electrolyte are incorporated in a battery case.

## Patentansprüche

1. Negativelektrode (100) für eine Sekundärbatterie, wobei eine Negativelektroden-Aktivmaterialschicht auf mindestens einer Oberfläche eines Negativelektroden-Stromabnehmers (101) ausgebildet ist,
wobei die Negativelektroden-Aktivmaterialschicht eine erste Negativelektroden-Aktivmaterialschicht (111) und eine zweite Negativelektroden-Aktivmaterialschicht (112) umfasst, die auf einer Seite oder auf beiden Seiten der ersten Negativelektroden-Aktivmaterialschicht (111) planar ausgebildet ist, und
wobei die erste Negativelektroden-Aktivmaterialschicht (111) unbeschichtetes Graphit als erstes Negativelektroden-Aktivmaterial umfasst und die zweite Negativelektroden-Aktivmaterialschicht (112) kohlenstoffbeschichtetes Graphit als zweites Negativelektroden-Aktivmaterial umfasst.

2. Negativelektrode (100) für eine Sekundärbatterie gemäß Anspruch 1, wobei:
die Negativelektrode (100) einen ersten geneigten Abschnitt (121) an einer Endseite, einen zweiten geneigten Abschnitt (122) an der anderen Endseite und einen flachen Abschnitt (123) umfasst, der sich zwischen dem ersten geneigten Abschnitt (121) und dem zweiten geneigten Abschnitt (122) in einer Ebene befindet, und
eine erste Negativelektroden-Aktivmaterialschicht (111) auf dem flachen Abschnitt (123) ausgebildet ist und eine zweite Negativelektroden-Aktivmaterialschicht (112) auf dem ersten geneigten Abschnitt (121) und dem zweiten geneigten Abschnitt (122) ausgebildet ist.

3. Negativelektrode (100) für eine Sekundärbatterie gemäß Anspruch 1, wobei:
der Graphit des ersten Negativelektroden-Aktivmaterials und des zweiten Negativelektroden-Aktivmaterials künstlicher Graphit oder natürlicher Graphit ist.

4. Negativelektrode (100) für eine Sekundärbatterie gemäß Anspruch 1, wobei:
der Kohlenstoff des zweiten Negativelektroden-Aktivmaterials niedrigkristallinen Kohlenstoff, amorphen Kohlenstoff oder eine Mischung davon umfasst.

5. Negativelektrode (100) für eine Sekundärbatterie gemäß Anspruch 1, wobei:
der Kohlenstoff in einer Menge von 5 bis 20 Gew.-%, basierend auf dem Gesamtgewicht des mit Kohlenstoff beschichteten Graphits, aufgebracht ist.

6. Negativelektrode (100) für eine Sekundärbatterie gemäß Anspruch 1, wobei:
die erste Negativelektroden-Aktivmaterialschicht (111) und die zweite Negativelektroden-Aktivmaterialschicht (112) mindestens ein Element umfassen, das ausgewählt ist aus der Gruppe bestehend aus einem Bindemittel und einem leitfähigen Material, die in jeder Schicht enthalten sind, wobei sie sich in ihrer Art oder in den Bestandteilverhältnissen der Komponenten unterscheiden.

7. Negativelektrode (100) für eine Sekundärbatterie gemäß Anspruch 6, wobei:
das erste Negativelektroden-Aktivmaterial unbeschichteten Graphit als Aktivmaterial: Styrol-Butadien-Kautschuk (SBR) als Bindemittel: Ruß oder Kohlenstoffnanoröhren (CNT) als leitfähiges Material in einem Gewichtsverhältnis von 93∼97: 1~5: 0,1~5 umfasst, und
das zweite Negativelektroden-Aktivmaterial kohlenstoffbeschichtetes Graphit als Aktivmaterial: Styrol-Butadien-Kautschuk (SBR) als Bindemittel: Ruß oder Kohlenstoffnanoröhren (CNT) als leitfähiges Material in einem Gewichtsverhältnis von 93∼97: 1~5: 0,1~5 umfasst.

8. Die Negativelektrode (100) für eine Sekundärbatterie gemäß Anspruch 1, wobei:
ein Volumenverhältnis der ersten Negativelektroden-Aktivmaterialschicht (111) und der zweiten Negativelektroden-Aktivmaterialschicht (112) 4:6 bis 6:4 beträgt.

9. Elektrodenanordnung (200, 300) für eine Sekundärbatterie, die die Negativelektrode (100) für eine Sekundärbatterie gemäß Anspruch 1 umfasst,
wobei die Elektrodenanordnung (200) einen Separator (220) umfasst, der zwischen einer Positivelektrode (210) und einer Negativelektrode (220) angeordnet ist, und
wobei die Positivelektrode (210) eine Positivelektroden-Aktivmaterialschicht (212) bildet, die auf mindestens einer Oberfläche eines Positivelektroden-Stromabnehmers (211) ausgebildet ist.

10. Elektrodenanordnung (200, 300) für eine Sekundärbatterie gemäß Anspruch 9, wobei:
die Positivelektroden-Aktivmaterialschicht (212) eine erste Positivelektroden-Aktivmaterialschicht (312) und eine zweite Positivelektroden-Aktivmaterialschicht (313) umfasst, die auf einer Seite oder auf beiden Seiten der ersten Positivelektroden-Aktivmaterialschicht (312) planar ausgebildet ist und eine andere Zusammensetzung aufweist als die erste Positivelektroden-Aktivmaterialschicht (312).

11. Elektrodenanordnung (200, 300) für eine Sekundärbatterie gemäß Anspruch 10, wobei:
die erste Positiv-Aktivschicht (312) und die zweite Positiv-Aktivschicht (313) jeweils mindestens ein Element ausgewählt aus der Gruppe umfassen, das ausgewählt ist aus der Gruppe bestehend aus einem Positiv-Aktivmaterial, einem Bindemittel und einem leitfähigen Material, die in jeder Schicht enthalten sind, wobei sie sich in ihrer Art oder in den Bestandteilverhältnissen der Komponenten unterscheiden.

12. Sekundärbatterie, bei der die Elektrodenanordnung (200, 300) für eine Sekundärbatterie gemäß Anspruch 9 und ein Elektrolyt in einem Batteriegehäuse angeordnet sind.

## Revendications

1. Électrode négative (100) pour batterie secondaire dans laquelle une couche de matériau actif d'électrode négative est formée sur au moins une surface d'un collecteur de courant d'électrode négative (101),
dans laquelle la couche de matériau actif d'électrode négative inclut une première couche de matériau actif d'électrode négative (111) et une seconde couche de matériau actif d'électrode négative (112) formée sur un côté ou sur les deux côtés de la première couche de matériau actif d'électrode négative (111) sur un plan, et
dans laquelle la première couche de matériau actif d'électrode négative (111) inclut du graphite non revêtu en tant que premier matériau actif d'électrode négative, et la seconde couche de matériau actif d'électrode négative (112) inclut du graphite revêtu de carbone en tant que second matériau actif d'électrode négative.

2. Électrode négative (100) pour batterie secondaire selon la revendication 1, dans laquelle :
l'électrode négative (100) inclut une première partie inclinée (121) sur un côté d'extrémité, une seconde partie inclinée (122) sur l'autre côté d'extrémité, et une partie plate (123) située entre la première partie inclinée (121) et la seconde partie inclinée (122) sur un plan, et
une première couche de matériau actif d'électrode négative (111) est formée sur la partie plate (123), et une seconde couche de matériau actif d'électrode négative (112) est formée sur la première partie inclinée (121) et la seconde partie inclinée (122).

3. Électrode négative (100) pour batterie secondaire selon la revendication 1, dans laquelle :
le graphite du premier matériau actif d'électrode négative et du second matériau actif d'électrode négative est du graphite artificiel ou du graphite naturel.

4. Électrode négative (100) pour batterie secondaire selon la revendication 1, dans laquelle :
le carbone du second matériau actif d'électrode négative inclut du carbone faiblement cristallin, du carbone amorphe, ou un mélange de ceux-ci.

5. Électrode négative (100) pour batterie secondaire selon la revendication 1, dans laquelle :
le carbone est revêtu en une quantité de 5 à 20 % en poids par rapport au poids total du graphite revêtu de carbone.

6. Électrode négative (100) pour batterie secondaire selon la revendication 1, dans laquelle :
la première couche de matériau actif d'électrode négative (111) et la seconde couche de matériau actif d'électrode négative (112) incluent au moins l'une sélectionnée dans le groupe constitué d'un liant et d'un matériau conducteur, dans lequel leurs types sont différents, ou les rapports de teneur en constituants sont différents.

7. Électrode négative (100) pour batterie secondaire selon la revendication 6, dans laquelle :
le premier matériau actif d'électrode négative inclut du graphite non revêtu en tant que matériau actif : du caoutchouc styrène-butadiène (SBR) en tant que liant : du noir de carbone ou des nanotubes de carbone (CNT) en tant que matériau conducteur dans un rapport de poids de 93~97 : 1~5 : 0,1~5, et
le second matériau actif d'électrode négative inclut du graphite revêtu de carbone en tant que matériau actif : du caoutchouc styrène-butadiène (SBR) en tant que liant : du noir de carbone ou des nanotubes de carbone (CNT) en tant que matériau conducteur dans un rapport de poids de 93~97 : 1~5 : 0,1~5.

8. Électrode négative (100) pour batterie secondaire selon la revendication 1, dans laquelle :
un rapport volumique entre la première couche de matériau actif d'électrode négative (111) et la seconde couche de matériau actif d'électrode négative (112) est de 4:6 à 6:4.

9. Ensemble électrode (200, 300) pour batterie secondaire comprenant l'électrode négative (100) pour batterie secondaire selon la revendication 1,
dans lequel l'ensemble électrode (200) inclut un séparateur (220) interposé entre une électrode positive (210) et une électrode négative (220), et
dans lequel l'électrode positive (210) présente une couche de matériau actif d'électrode positive (212) formée sur au moins une surface d'un collecteur de courant d'électrode positive (211).

10. Ensemble électrode (200, 300) pour batterie secondaire selon la revendication 9, dans lequel :
la couche de matériau actif d'électrode positive (212) inclut une première couche de matériau actif d'électrode positive (312) et une seconde couche de matériau actif d'électrode positive (313) formée sur un côté ou sur les deux côtés de la première couche de matériau actif d'électrode positive (312) sur un plan et présentant une composition différente de celle de la première couche de matériau actif d'électrode positive (312).

11. Ensemble électrode (200, 300) pour batterie secondaire selon la revendication 10, dans lequel :
la première couche de matériau actif positif (312) et la seconde couche de matériau actif positif (313) incluent au moins l'une sélectionnée dans le groupe consistant en un matériau actif positif, un liant et un matériau conducteur inclus dans chaque couche, dans lequel leurs types sont différents, ou les rapports de teneur en composants sont différents.

12. Batterie secondaire dans laquelle l'ensemble électrode (200, 300) pour batterie secondaire selon la revendication 9 et un électrolyte sont incorporés dans un logement de batterie.
